# EUROPÄISCHE PATENTSCHRIFT

(11) **EP 1 398 604 B1**
(45) Veröffentlichungstag und Bekanntmachung des Hinweises auf die Patenterteilung: **09.09.2009**
(21) Anmeldenummer: 03012346.7
(22) Anmeldetag: 30.05.2003
(51) Int. Cl.: G01F 11/00, B01L 3/02

(54) **Verfahren zum Handhaben von Daten einer Dosiervorrichtung und Dosiervorrichtung geeignet zur Durchführung des Verfahrens**
Method for handling data of a dosing device and dosing device adapted to perform such method
Procédé de gestion de données d'un dispositif de dosage et dispositif de dosage pour la mise en oeuvre du procédé

(30) Priorität: 30.08.2002 DE 10239901
(43) Veröffentlichungstag der Anmeldung: 17.03.2004
(60) Teilanmeldung: 09009774.2
(73) Patentinhaber: EPPENDORF AG, 22339 Hamburg (DE)
(72) Erfinder: Mellenthin, Uwe, 22848 Norderstedt (DE); Paebst, Knut, 22417 Hamburg (DE); Dreyer, Ralf, 24558 Henstedt-Ulzburg (DE); Garzmann, Peter, 22393 Hamburg (DE)
(74) Vertreter: Hauck Patent- und Rechtsanwälte

(56) Entgegenhaltungen:
- EP-A- 0 999 432
- WO-A-02/090895
- DE-A- 19 911 397
- US-A- 5 620 661
- PATENT ABSTRACTS OF JAPAN vol. 2002, no. 04, 4. August 2002 (2002-08-04) & JP 2001 356688 A (TOSHIBA CORP), 26. Dezember 2001 (2001-12-26)

## Beschreibung

Die Erfindung bezieht sich auf ein Verfahren zum Handhaben von Daten einer Dosiervorrichtung.

Dosiervorrichtungen im Sinne dieser Anmeldung sind manuell oder motorisch betriebene Pipetten oder Dispenser in tragbarer oder stationärer Ausführung und Dosierautomaten. Bei der Herstellung dieser Dosiervorrichtungen fallen produktionsbezogene Daten an, die insbesondere den Auftrag, die individuelle Produktnummer, die Produktcharge und Qualitätssicherungsdaten umfassen. Zu den Qualitätssicherungsdaten gehören insbesondere die Daten der Erstkalibrierung des Herstellers. Diese produktionsbezogenen Daten werden herkömmlicherweise in Begleitdokumenten der Dosiervorrichtung festgehalten bzw. beim Hersteller archiviert. Zum Teil sind sie nur durch Auskunft des Herstellers zugänglich.

Bei der Anwendung fallen anwendungsbezogene Daten an, beispielsweise Inventarisierungsdaten oder Qualitätssicherungsdaten des Anwenders. Zu den Qualitätssicherungsdaten des Anwenders gehören insbesondere die Kalibrationsdaten für die Meßmittelüberwachung. Herkömmlicherweise werden diese Daten vom Anwender in Begleitdokumenten festgehalten. Zum Teil sind die Daten auf beschriebenen Etiketten an der Dosiervorrichtung angebracht.

Die bisherige Handhabung hat den Nachteil, daß der Zugriff auf die Daten sowie deren Aktualisierung und Ergänzung umständlich ist und die benötigten Daten nicht immer ohne weiteres zur Verfügung stehen.

Die WO 01/62322 A offenbart einen manuell angetriebenen mechanischen Medikauxentendispenser. Ein RFID ist mit dem Gehäuse oder dem Medikamentenbehälter des Medikamentendispensers verbunden. Die im RFID gespeicherten Informationen umfassen Angaben über die Einhaltung der Herstellung- und der Distributionsvorgaben, die an verschiedenen Stellten des Herstellungs- oder Distributionsprozesses in den Speicher eingeschrieben werden können. Hierdurch wird eine detaillierte und leicht zugängliche Produkthistorie des Dispensers zur Verfügung gestellt Diese Informationen können beispielsweise Daten und Zeitstempel und eine einzigartige Seriennummer für die Detektion des Produktes und die Verhinderung von Piraterie sein. Die Informationen können auch eine grundlegende Produktinförmation, wie die Art des Medikaments und Dosierungshinweise, Kundeninformation und Distributionsinformationen umfassen.

Gemäß DE 199 11 397 A1 werden Pipettiergeräte insbesondere zur Dokumentation von Daten mit Schnittstellen zur Datenübertragung ausgerüstet. Das Pipettiergerät wird mit einer drahtlosen Schnittstelle zur Datenübertragung versehen, sodass es nicht erforderlich ist, das Gerät über Schnittstellenkabel mit einer zentralen Datenverarbeitungsanlage zu verbinden. Die drahtlose Schnittstelle ist als Infrarot-, Ultraschall- oder Funksehnittstelle ausgebildet. Auch bei diesen Pipettiergeräten werden Daten extern protokolliert, sodass der Zugriff auf die Daten vielfach nicht ohne Weiteres gegeben ist.

Die EP 0 999 432 A offenbart ein Verfahren zum Betreiben eines elektronischen Dosiersystems mit einer Handdosiervorrichtung mit einem elektrischen Antrieb und einer programmgesteuerten elektronischen Steuer- und/oder Regeleinrichtung für den Antrieb. Ferner ist ein nicht-flüchtiger Schreib-/Lesespeicher und eine mit der elektronischen Steuer- und/oder Regeleinrichtung verbundenen Datenschnittstelle vorhanden. Eine Datenverarbeitungsanlage ist über eine Datentransfereinrichtung und eine Datenschnittstelle mit der Datenschnittstelle der Dosiervorrichtung verbindbar. Mittels der Datenverarbeitungsanlage sind über die Datenschnittstellen Parameter in den Schreib-/Lesespeicher einschreibbar und/oder aus diesem auslesbar und/oder ist die Dosierverrichtung fernsteuerbar. Die Datenschnittstellen können insbesondere drahtlos miteinander kommunizieren. Das Einschreiben von Parametern in den Schreib-/Lesespeicher und das Auslesen von Daten aus diesem ist erst möglich, wenn das elektronische Dosiersystem betriebsbereit ist, d.h. vollständig installiert, programmiert und an eine elektrische Spannungsversorgung angeschlossen ist.

Davon ausgehend liegt der Erfindung die Aufgabe zugrunde, ein das Handhaben von Daten einer Dosiervorrichtung während der Herstellung und der Anwendung vereinfachendes Verfahren zur Verfügung zu stellen.

Die Aufgabe wird durch ein Verfahren mit den Merkmalen des Anspruches 1 gelöst. Vorteilhafte Ausgestaltungen des Verfahrens sind in den Unteransprüchen angegeben.

Bei dem erfindungsgemäßen Verfahren zum Handhaben von Daten einer Pipette
- wird die Pipette im Produktionsprozeß mit mindestens einem passiven Transponder versehen, in den Daten mittels einer Schreibeinrichtung berührungslos einspeicherbar und aus dem Daten mittels einer Leseeinrichtung berührungslos auslesbar sind,
- werden im Produktionsprozeß mittels einer Schreibeinrichtung produktionsbezogene spezifische Daten der Dosiervorrichtung in den passiven Transponder eingespeichert, die Daten einer Erstkalibrierung enthaltend Richtigkeit und/oder Präzision umfassen, und
- werden bei der Anwendung mittels einer Schreibeinrichtung anwendungsbezogene spezifische Daten der Dosiervorrichtung in den passiven Transponder eingespeichert, die Kalibrationsdaten enthaltend Richtigkeit und/oder Präzision eines Anwenders umfassen.

Die erfindungsgemäße Dosiervorrichtung umfaßt einen passiven Transponder, in den produktionsbezogene spezifische Daten und anwendungsbezogene spezifische Daten der Dosiervorrichtung berührungslos einspeicherbar und aus dem diese Daten berührungslos auslesbar sind.

Die Erfindung ermöglicht das Speichern der produktionsbezogenen und der anwendungsbezogenen spezifischen Daten in der Dosiervorrichtung. Hierdurch wird eine Herstellung und Anwendung der Dosiervorrichtungen ohne Begleitdokumente, eine einfache Aktualisierbarkeit und Ergänzbarkeit der Daten mittels einer Schreibeinrichtung und eine einfache und vollständige Verfügbarkeit der Daten mittels einer Leseeinrichtung sichergestellt. Ferner wird durch die Speicherung der anwendungsbezogenen und produktionsbezogenen spezifischen Daten die Rückverfolgbarkeit des Produktes (Hersteller, Vertrieb, Anwender und Anwendungen, Wartung und Service) erleichtert. Ein weiterer Vorteil ist die einfache Auffindbarkeit einer gesuchten Dosiervorrichtung durch berührungsloses Auslesen spezifischer Daten durch Verpackungsmaterial etc. hindurch.

Geeignete passive Transponder sowie Schreib- und/oder Leseeinrichtungen stehen kostengünstig zur Verfügung. Geeignet sind insbesondere RFID (Radio Frequency Identification)-Systeme bestehend aus einem Transponder in Form eines Mikrochips mit einer Antenne und einer mobilen bzw. stationären Schreib- und/oder Leseeinrichtung mit Antenne. Bei diesen Systemen erfolgt eine berührungslose Datenübertragung auf der Basis elektromagnetischer Wechselfelder. Damit sind RFID-Systeme in unterschiedlichen Frequenzbereichen (kHz, MHz, GHz) verfügbar. Ferner enthält der Transponder eine Software, welche die Datenübertragung und -speicherung managt. Diese Software ist auf den Anwendungszweck des Transponders zugeschnitten. Gemäß einer bevorzugten Ausgestaltung wird die Dosiervorrichtung mit einem passiven Transponder versehen, bei dem die Energieversorgung induktiv durch die Schreib- und/oder Lesevorrichtung erfolgt.

Geeignete RFID-Systeme, Transponder und Schreib- und/oder Lesegeräte werden beispielsweise von den Firmen MBBS SA, Rue de la Gare 5a, CH-2035 Corcelles/Schweiz (Produkt MasterTrace^{™}), PAV Card GmbH, Hamburger Straße 6, 22952 Lütjensee/Germany (Produkt "Scid M") und Datatronic Kodiertechnik GmbH, A-2345 Brunn/Gebirge, Industriestraße B16/BG5 (Produkt "Memor 2000 RFID") zur Verfügung gestellt.

Gemäß einer Ausgestaltung wird das am Anfang des Montageprozesses stehende Produktteil mit dem Transponder versehen, um produktionsbezogene Daten umfassend einzuspeichern. Insbesondere wenn die Dosiervorrichtung mehrere vormontierte Montagemodule aus mehreren Produktteilen umfaßt, können mehrere Transponder zum Einsatz kommen, die jeweils einem Montagemodul zugeordnet werden, vorzugsweise dem am Anfang des Montageprozesses stehenden Produktteil des jeweiligen Montagemoduls.

Gemäß einer Ausgestaltung wird der Transponder zum Schutz vor mechanischer Beschädigung bzw. Beschädigung durch aggressive Flüssigkeiten oder Gase in der Dosiervorrichtung gekapselt. Hierfür kann er im Inneren eines Gehäuses der Dosiervorrichtung angeordnet oder in ein Kunststoffgehäuse der Dosiervorrichtung eingespritzt sein.

Nach einer Ausgestaltung wird/werden als produktionsbezogene spezifische Daten eine Artikelnummer und/oder eine Seriennummer der Dosiervorrichtung und/oder eine Produktionsauftragsnummer und/oder eine Chargennummer und/oder Produktänderungsdaten im Transponder gespeichert.

Gemäß einer Ausgestaltung werden als produktionsbezogene spezifische Daten die Daten einer Erstkalibrierung im Transponder gespeichert. Diese umfassen als Qualitätssicherungsdaten nach DIN bzw. ISO die folgenden Daten:
- Richtigkeit
- Präzision
- Datum der Erstkalibrierung
- Nummer des Meßplatzes
- Name/Nummer des Prüfers.

Gemäß einer Ausgestaltung werden als anwendungsbezogene spezifische Daten Vertriebsdaten im Transponder eingespeichert. Gemäß einer weiteren Ausgestaltung umfassen die Vertriebsdaten Kundendaten (z.B. Kundennummer) und/oder das Verkaufsdatum.

Gemäß einer Ausgestaltung werden als anwendungsbezogene spezifische Daten Inventardaten (z.B. Inventarnummer des Anwenders) im Transponder eingespeichert. Dies vereinfacht die Inventarisierung der Dosiervorrichtungen.

Gemäß einer Ausgestaltung werden als anwendungsbezogene spezifische Daten Kalibrationsdaten des Anwenders im Transponder eingespeichert. Diese umfassen als Qualitätssicherungsdaten der Meßmittelüberwachung im Rahmen der Zertifi zierung die folgenden Daten:
- Richtigkeit
- Präzision
- Datum der Kalibrierung
- Nummer des Meßplatzes
- Name/Nummer des Prüfers.

Gemäß einer Ausgestaltung werden als anwendungsbezogene spezifische Daten Benutzungsdaten abgespeichert. Dies können z.B. Daten betreffend die dosierten Fluide einer Kontaminierung und einer Dekontaminierung sein.

Gemäß einer Ausgestaltung werden als anwendungsbezogene spezifische Daten Wartungs- und/oder Reparaturdaten im Transponder eingespeichert. Gemäß einer weiteren Ausgestaltung umfassen diese das Datum der letzten Wartung und/oder Reparatur und/oder Reparaturdaten (z.B. Reparaturkennzahl), die einen Fehler und/oder ein ausgetauschtes Teil beschreiben.

Die produktionsbezogenen und/oder anwendungsbezogenen Daten können ganz oder teilweise unveränderbar und/oder veränderbar im Transponder eingespeichert werden. Gemäß einer bevorzugten Ausgestaltung werden die produktionsbezogenen spezifischen Daten ganz oder teilweise unveränderbar im Transponder gespeichert, da insofern regelmäßig kein Änderungs- und Aktualisierungsbedarf besteht und die Daten hierdurch gesichert werden können. Dasselbe gilt für die Vertriebsdaten. Gemäß einer Ausgestaltung werden die anwendungsspezifischen Daten ganz oder teilweise veränderbar im Transponder gespeichert, weil hier regelmäßig ein Zugriff auf die aktuellsten Daten erforderlich ist und um Speicherplatz zu sparen. Grundsätzlich ist es aber auch möglich, sämtliche Daten unveränderbar zu speichern, um sämtliche Daten umfassend zu dokumentieren, soweit dies die Speicherkapazität erlaubt. Derzeit sind Transponder mit einer Speicherkapazität von 256 Bit bis 1 kByte verfügbar.

Gemäß einer Ausgestaltung werden mittels einer Leseeinrichtung die im Transponder eingespeicherten produktionsbezogenen spezifischen Daten ganz oder teilweise im Produktionsprozeß und/oder bei der Anwendung und/oder die im Transponder eingespeicherten anwendungsbezogenen spezifischen Daten ganz oder teilweise bei der Anwendung ausgelesen. Sowohl im Produktionsprozeß als auch bei der Anwendung sind sämtliche Daten verfügbar, die eingespeichert worden sind.

Es folgen Beispiele für produktionsbezogene und anwendungsbezogene spezifische Daten, die im Rahmen der Erfindung für die Einspeicherung in der Dosiervorrichtung vorgesehen werden können:
1. Produktionsbezogene Daten
   - Artikelnummer
   - Auftragsnummer des Herstellers
   - individuelle Werknummer des Gerätes
   - Qualitätsdaten
   - Zeitpunkt der Kalibrierung
   - Produkt-Änderungsdaten.
2. Vertriebsdaten
   - Kundennummer
   - Verkaufsdatum.
3. Servicedaten
   - Garantiedaten
   - Dokumentation der Reparatur (Zeitpunkt, Teile)
   - Kalibrationsdaten
   - Datum nächster Kalibration (durch den Anwender abrufbar)
4. Anwendungsbezogene Daten des Anwenders
   - spezifische Kalibration des Anwenders
   - Anwenderzuordnung (Person, Bereich, Kostenstelle etc.)
   - Inventamummer und Daten der Lebenszyklusüberwachung
   - Meßmittelüberwachung im Rahmen der Zertifizierung (Zeitpunkt, Meßwerte, nächster Kalibrationstermin)
   - Benutzungsdaten (z.B. Benutzung in Hochsicherheits- und/oder radioaktiven Bereichen; Daten der Kontaminierung bzw. Dekontaminierung).

## Patentansprüche

1. Verfahren zum Handhaben von Daten einer Pipette, bei dem
- die Pipette im Produktionsprozeß mit mindestens einem passiven Transponder versehen wird, in den Daten mittels einer Schreibeinrichtung berührungslos einspeicherbar und aus dem Daten mittels einer Leseeinrichtung berührungslos auslesbar sind,
- im Produktionsprozeß mittels einer Schreibeinrichtung produktionsbezogene spezifische Daten der Dosiervorrichtung in den passiven Transponder eingespeichert werden, die Daten einer Erstkalibrierung enthaltend Richtigkeit und/oder Präzision umfassen, und
- bei der Anwendung mittels einer Schreibeinrichtung anwendungsbezogene spezifische Daten der Dosiervorrichtung in den passiven Transponder eingespeichert werden, die Kalibrationsdaten enthaltend Richtigkeit und/oder Präzision eines Anwenders umfassen.

2. Verfahren nach Anspruch 1, bei dem ein am Anfang des Montageprozesses stehendes Produktteil mit dem Transponder versehen wird.

3. Verfahren nach einem der Ansprüche 1 bis 2, bei dem der Transponder in der Pipette gekapselt wird.

4. Verfahren nach einem der Ansprüche 1 bis 3, bei dem als produktionsbezogene spezifische Daten eine Artikelnummer und/oder eine Seriennummer der Pipette und/oder eine Produktionsauftragsnummer und/oder eine Chargennummer in den Transponder eingespeichert wird/werden.

5. Verfahren nach einem der Ansprüche 1 bis 4, bei dem als anwendungsbezogene spezifische Daten Vertriebsdaten in den Transponder eingespeichert werden.

6. Verfahren nach einem der Ansprüche 1 bis 5, bei dem als anwendungsbezogene spezifische Daten Inventardaten des Anwenders in den Transponder eingespeichert werden.

7. Verfahren nach einem der Ansprüche 1 bis 6, bei dem als anwendungsbezogene spezifische Daten Benutzungsdaten in den Transponder eingespeichert werden.

8. Verfahren nach einem der Ansprüche 1 bis 7, bei dem als anwendungsbezogene spezifische Daten Wartungs- und/oder Reparaturdaten in den Transponder eingespeichert werden.

9. Verfahren nach einem der Ansprüche 1 bis 8, bei dem die produktionsbezogenen spezifischen Daten ganz oder teilweise unveränderbar im Transponder gespeichert werden.

10. Verfahren nach einem der Ansprüche 1 bis 9, bei dem die anwendungsbezogenen spezifischen Daten ganz oder teilweise veränderbar im Transponder gespeichert werden.

11. Verfahren nach einem der Ansprüche 1 bis 10, bei dem mittels einer Leseeinrichtung die im Transponder gespeicherten produktionsbezogenen spezifischen Daten ganz oder teilweise im Produktionsprozeß und/oder bei der Anwendung und/oder die im Transponder gespeicherten anwendungsbezogenen spezifischen Daten ganz oder teilweise bei der Anwendung ausgelesen werden.

## Claims

1. A method for handling data of a proportioning device wherein
the proportioning device, in the production process, is provided with at least one passive transponder into which data can be contactlessly stored by means of a writing device and from which data can be contactlessly read out by means of a reading device,
production-related specific data of the proportioning device comprising data of an initial calibration including correctness and/or precision is stored, in the production process, into the passive transponder by means of a writing device, and
if applied, application-related specific data of the proportioning device comprising calibration data of the user including correctness and/or precision is stored into the passive transponder by means of a writing device.

2. The method as claimed in claim 1 wherein a product component which is at the beginning of the assembly process is provided with the transponder.

3. The method as claimed in any one of claims 1 to 2 wherein the transponder is encapsulated in the proportioning device.

4. The method as claimed in any one of claims 1 to 3 wherein an article number and/or a serial number of the proportioning device and/or a production order number and/or a batch number is/are stored into the transponder as production-related specific data.

5. The method as claimed in any one of claims 1 to 4 wherein sales data is stored into the transponder as application-related specific data.

6. The method as claimed in any one of claims 1 to 5 wherein inventory data of the user is stored into the transponder as application-related specific data.

7. The method as claimed in any one of claims 1 to 6 wherein usage data is stored into the transponder as application-related specific data.

8. The method as claimed in any one of claims 1 to 7 wherein maintenance and/or repair data is stored into the transponder as application-related specific data.

9. The method as claimed in any one of claims 1 to 8 wherein the production-related specific data is stored to be fully or partially invariable into the transponder.

10. The method as claimed in any one of claims 1 to 9 wherein the application-related specific data is stored to be fully or partially variable into the transponder.

11. The method as claimed in any one of claims 1 to 10 wherein the production-related specific data stored in the transponder are read out fully or partially in the production process and/or during application and/or the application-related specific data stored in the transponder are read out fully or partially during application, by means of a reading device.

## Revendications

1. Procédé de gestion de données d'une pipette, dans lequel
- la pipette est pourvue dans le processus de production d'au moins un transpondeur passif dans lequel des données peuvent être enregistrées sans contact au moyen d'un dispositif d'enregistrement et duquel des données peuvent être lues sans contact au moyen d'un dispositif de lecture,
- dans le processus de production, des données du dispositif de dosage spécifiques liées à la production, qui comprennent des données d'un premier étalonnage comprenant justesse et/ou fidélité, sont enregistrées au moyen d'un dispositif d'enregistrement dans le transpondeur passif, et
- lors de l'application, des données du dispositif de dosage spécifiques liées à l'application, qui comprennent des données d'étalonnage d'un utilisateur, comprenant justesse et/ou fidélité, sont enregistrées au moyen d'un dispositif d'enregistrement dans le transpondeur passif.

2. Procédé selon la revendication 1, dans lequel un élément du produit se trouvant au début du processus de montage est pourvu du transpondeur.

3. Procédé selon l'une des revendications 1 à 2, dans lequel le transpondeur est encapsulé dans la pipette.

4. Procédé selon l'une des revendications 1 à 3, dans lequel comme données spécifiques liées à la production, un numéro d'article et/ou un numéro de série de la pipette et/ou un numéro d'ordre de fabrication et/ou un numéro de lot est/sont enregistré(s) dans le transpondeur.

5. Procédé selon l'une des revendications 1 à 4, dans lequel comme données spécifiques liées à l'application, des données de distribution sont enregistrées dans le transpondeur.

6. Procédé selon l'une des revendications 1 à 5, dans lequel comme données spécifiques liées à l'application, des données d'inventaire de l'utilisateur sont enregistrées dans le transpondeur.

7. Procédé selon l'une des revendications 1 à 6, dans lequel comme données spécifiques liées à l'application, des données d'utilisation sont enregistrées dans le transpondeur.

8. Procédé selon l'une des revendications 1 à 7, dans lequel comme données spécifiques liées à l'application, des données de maintenance et/ou de réparation sont enregistrées dans le transpondeur.

9. Procédé selon l'une des revendications 1 à 8, dans lequel les données spécifiques liées à la production sont enregistrées dans le transpondeur de manière complètement ou partiellement inaltérable.

10. Procédé selon l'une des revendications 1 à 9, dans lequel les données spécifiques liées à l'application sont enregistrées dans le transpondeur de manière complètement ou partiellement modifiable.

11. Procédé selon l'une des revendications 1 à 10, dans lequel au moyen d'un dispositif de lecture, les données spécifiques liées à la production enregistrées dans le transpondeur sont lues complètement ou partiellement dans le processus de production et/ou lors de l'application et/ou les données spécifiques liées à l'application enregistrées dans le transpondeur sont lues complètement ou partiellement lors de l'application.
